Europäisches Patentamt

European Patent Office

Office européen des brevets

(19)

(11) Publication number: **0 063 934**
**B1**

# EUROPEAN PATENT SPECIFICATION

(12)

(45) Date of publication of patent specification: **19.02.86**

(21) Application number: **82302097.9**

(22) Date of filing: **23.04.82**

(51) Int. Cl.⁴: **G 02 B 26/10,** G 02 B 27/00, G 11 B 7/08

(54) **Optical devices for controlling a light beam.**

(30) Priority: **27.04.81 JP 63706/81**

(43) Date of publication of application:
**03.11.82 Bulletin 82/44**

(45) Publication of the grant of the patent:
**19.02.86 Bulletin 86/08**

(84) Designated Contracting States:
**DE FR GB NL SE**

(56) References cited:
**FR-A-2 294 605**
**US-A-3 946 166**
**US-A-4 175 832**

**PATENTS ABSTRACTS OF JAPAN, vol. 2, no.
20, February 9, 1978**
**PATENTS ABSTRACTS OF JAPAN, vol. 4, no.
24(E-173), February 29, 1980**

(73) Proprietor: **SONY CORPORATION**
**7-35 Kitashinagawa 6-Chome Shinagawa-ku
Tokyo 141 (JP)**

(72) Inventor: **Yano, Hajime
1-24-6 Numabukuro
Nakano-ku Tokyo (JP)**

(74) Representative: **Thomas, Christopher Hugo
et al
D Young & Co 10 Staple Inn
London WC1V 7RD (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to apparatus for controlling a light beam by means of a lens. According to the invention movement of the lens is controlled in two directions at right angles to each other by an optical scanning assembly. The assembly can be used in an optical disc player or other apparatus in which a light beam is directed onto a record medium surface for optically reading information recorded in a track on the surface.

It is known to provide an optical disc player with a focusing servo by which a light beam from a laser light source is correctly focused on a disc surface through an objective lens, and also with a tracking servo by which the point of impingement of the focused light beam on the disc surface is made to coincide with the track being scanned or read. In one known form of optical disc player, for example, as disclosed in US patent specification US—A—4 135 085, an objective lens holder is supported by first and second sets of springs so that the objective lens can be moved, in response to electromagnetically applied forces, both in the axial direction for correcting focusing errors, and in a direction extending radially with respect to a track being scanned on a record disc for correcting tracking errors. However, the use of resilient plates or springs to support the objective lens holder gives rise to problems in that mechanical resonance of the springs or resilient plates occurs at a specific frequency and causes deterioration of either the focusing servo control or the tracking servo control. Furthermore, the use of a plurality of springs to support the objective lens results in a rather complex structure which is difficult to assemble and align.

Various means using permanent magnets and/or electromagnetic coils are known for supporting and moving an optical or other element angularly or rectilinearly. See, for example, US—A—3 946 166, US—A—4 175 832, FR—A—2 294 605 and JP—A—52-139312.

According to the present invention there is provided in an apparatus for directing a light beam onto a record medium surface for optically reading information recorded in a track on said surface; an optical scanning assembly comprising:

lens means interposed in the path of said light beam and having an optical axis substantially coinciding with said path;

a support member defining a support axis; and

a movable member mounted on said support member for rectilinear movements along and for angular movements about said support axis, said lens means being carried by said movable member;

characterised in that:

said optical axis is substantially parallel to, and offset from said support axis so that said rectilinear movements vary the focus of said light beam at said surface and said angular movements vary the position on said surface at which the focused light beam impinges;

a first magnet in the shape of a bar is carried by said movable member and is magnetized in a longitudinal direction extending substantially radially with respect to said support axis;

a second magnet is fixed relative to said support member and has a closed shape extending around said first magnet, said second magnet being magnetized in a direction substantially parallel to said longitudinal direction in which said first magnet is magnetized to provide a magnetic field which reacts with the magnetic field of said first magnet for yieldably resisting said rectilinear and angular movements of said movable member, and said lens means carried thereby, from a stable balanced position relative to said support member; and

first and second electromagnetic means are selectively operative to cause said rectilinear and angular movements, respectively, of said movable member.

The invention will now be described by way of example with reference to the accompanying drawings, throughout which like references designate like elements, and in which:

Figure 1 is a schematic view showing an optical disc player with an optical scanning assembly or pick-up to which a device according to the invention can be applied;

Figure 2 is a schematic, partly exploded perspective view showing a previously proposed device for holding an objective lens in an optical disc player of the kind shown in Figure 1;

Figure 3A is an exploded perspective view showing the main components of an embodiment of an optical scanning assembly according to the invention;

Figures 3B and 3C are perspective views showing details and relationships of certain components of Figure 3A;

Figure 4 is a vertical sectional view showing the device of Figure 3A in its assembled condition;

Figure 5 is a schematic perspective view illustrating a modification of the embodiment of Figures 3A, 3B, 3C and 4;

Figures 6A and 6B are schematic perspective views illustrating portions of other embodiments of an optical scanning assembly according to the invention; and

Figures 7A and 7B are perspective views illustrating modifications of an element of the embodiments.

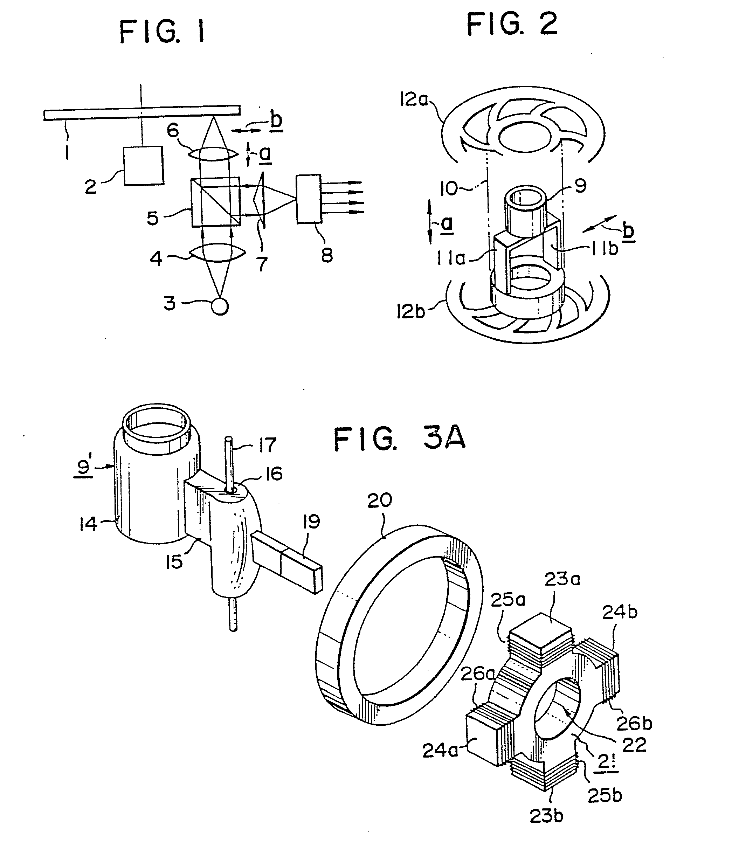

To assist understanding of the invention, an optical disc player of a type to which the invention may advantageously be applied will first be described with reference to Figure 1. As there shown, a record medium in the form of an optical disc 1 has video, audio or other information signals recorded thereon in the form of an array of protrusions or pits along a track on the surface of the disc 1 which is suitably rotated about its centre at a constant linear velocity, by a motor 2. In a typical optical disc 1, pits or recesses are formed in a reflective surface of the disc 1 along a spiral track with an average track pitch between successive turns of the spiral track, of, for example, 1.6 micron, and the reflective surface of the disc 1 is covered with a transparent resin layer. A laser light beam is emitted by a laser 3 and is directed onto the reflective surface of the disc 1 through a collimating lens 4, a beam splitter 5 and an objective lens 6 which is intended to focus the light beam at the reflective surface. The light beam reflected by the reflective surface of the disc 1, and having its energy modulated by the signal recorded in the track being scanned on the disc 1, is returned through the objective lens 6 to the beam splitter 5 which diverts the reflected light beam through a lens 7 to a light receiving device or transducer 8 comprising a plurality of photo-diodes or the like. The photo-diodes are arranged in a predetermined positional relationship to provide respective output signals in response to the reflected light beam supplied thereto through the lens 7. The output signals from the photo-diodes are supplied to an operational circuit (not shown) which, as is known, provides therefrom a reproduced information signal, a focusing error signal and a tracking error signal.

In the correctly focused condition, the laser light beam passing through the objective lens 6 is focused thereby at the reflective surface on the disc 1 in which the pits or recesses are formed and, in the correct tracking condition, the spot formed by the laser light beam on the disc 1 is positioned precisely on the record track along which the pits or recesses are arrayed. However, in practice, deformation and/or eccentricity of the disc 1, while being rotated, causes defocusing or mistracking of the laser light beam with respect to the disc 1. Accordingly, it is known to provide an optical disc player of the type illustrated schematically in Figure 1 with a focusing servo control for moving the objective lens 6 in the direction of its optical axis, that is, perpendicular to the surface of the disc 1, as indicated by the double-headed arrow a, in response to the previously mentioned focusing error signal, so that the focus point of the laser light beam is shifted, as required, to be again located at the reflective surface of the disc 1, and also with a tracking servo control for moving the lens 6 in a direction parallel to the surface of the disc 1, as indicated by the double-headed arrow b, in response to the tracking error signal, so that the point of impingement of the laser light beam on the disc 1 is restored to the record track being scanned. Movement of the lens 6 in a direction parallel to the surface of the disc 1 for effecting the tracking servo control is preferred over the provision of a pivoted mirror (not shown) located in the path of the laser light beam and being angularly displaced with response to the tracking error signal for moving the point of impingement of the laser light beam on the disc 1 transversely with respect to the track being scanned. This preference results from the fact that the addition of the pivotally mounted mirror complicates the optical system and prevents it being made compact. This is particularly a problem in providing an optical disc player for a pulse code modulated audio disc of small diameter.

Referring now to Figure 2, it will be seen that the objective lens 6 of the optical disc player of Figure 1 may be supported for movement both in the direction of its optical axis and in a direction at right angles thereto, in a tubular lens holder 9 which is mounted on a cylindrical member 10 by means of a pair of diametrically opposed axially diverted plate springs 11a and 11b which are parallel to each other and extend from the cylindrical member 10. The cylindrical member 10 is, in turn, mounted relative to a support (not shown) by means of a pair of leaf or plate spring members 12a and 12b joined, at their inner peripheries, to the cylindrical member 10 at axially spaced locations, and also joined, at their outer peripheries, to the previously mentioned support. Thus, flexing of the plate spring members 12a and 12b permits movement of the lens holder 9 in the direction of the double-headed arrow a, that is, in the direction of the optical axis of the objective lens 6 in the lens holder 9, by a suitably generated electromagnetic force in response to the focusing error signal. The springs 11a and 11b permit displacement or shifting of the lens holder 9 in the direction at right angles to the optical axis of the objective lens 6, for example in the direction indicated by the double-headed arrow b, by means of an electromagnetic force which is suitably generated in response to the tracking error signal.

Although the arrangement indicated in Figure 2 for mounting the lens holder 9 avoids slanting of the optical axis of the objective lens 6 relative to the path of the laser light beam therethrough when the objective lens 6 is displaced in the direction of the arrow b for correcting a tracking error, such mounting arrangement, as previously mentioned, is disadvantageous in that the resilient springs or plates 11a, 11b, 12a and 12b are subject to mechanical resonance at predetermined respective frequencies so that the focusing servo control and/or the tracking servo control is deteriorated thereby.

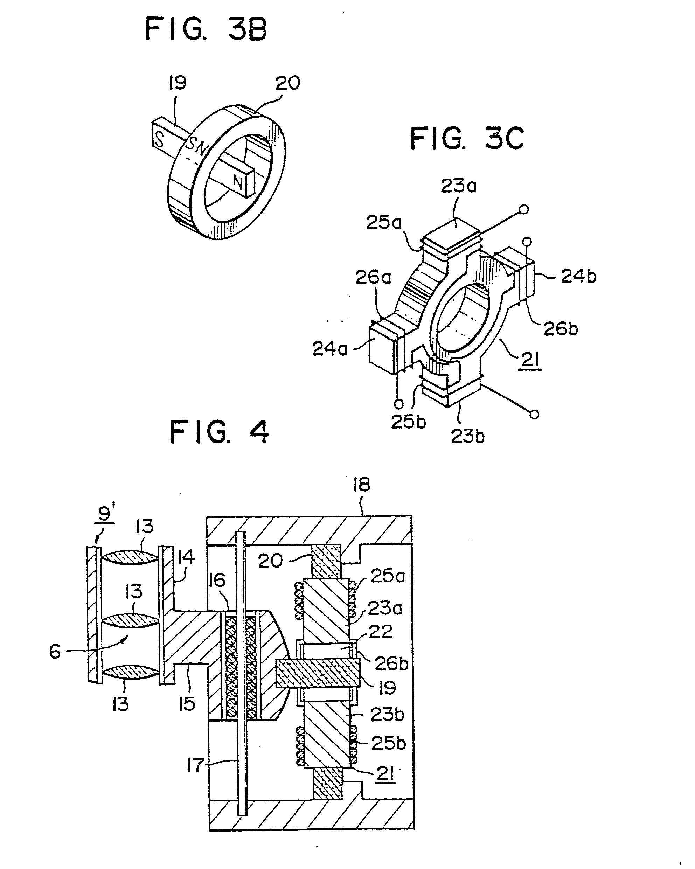

Referring now to Figures 3A and 4, it will be seen that, in an embodiment of an optical scanning assembly according to the invention, which can be employed in an optical disc player of the type shown in Figure 1 for controlling the focusing and tracking of the laser light beam, a lens holder 9' for the objective lens 6 is formed by an open-ended tubular member 14. As shown in Figure 4, the objective lens 6 may be formed by a plurality of lenses 13 held in the tubular member 14 and having a common optical axis. An arm 15 extends integrally from the tubular member 14 and, at the end of the arm 15 remote from the tubular member 14, a ball bearing 16 is provided therein to receive a shaft 16 which has its longitudinal axis extending parallel to the axis of the tubular member 14, and hence to the optical axis of the objective lens 6. The shaft 17 is secured, at its opposite ends, in a support member 18 which is suitably mounted to dispose the axis of the shaft 17 perpendicular to the plane of the disc 1 in Figure 1 so that rectilinear movements of the tubular member 14 parallel to the axis of the shaft 17 will vary the focus of the light beam acted on by the objective lens 6, and angular movements of the tubular member 14 and the arm 15 about the axis of the shaft 17 will be effective, for example, to displace the spot at which the laser light beam lands on the disc 1 in the direction transverse to the track being scanned. Further, the support member 18 may itself be mounted for gradual movement in the radial direction of the disc 1 so that, as the disc 1 is rotated, the optical scanning assembly or pick-up is progressively moved radially for causing the laser light beam to follow a spiral record track on the disc 1.

A bar magnet 19 which is magnetized in its longitudinal direction, as shown particularly in Figure 3B, extends from the arm 15 radially with respect to the axis of the shaft 17 at the side of the shaft 17 opposite to the tubular member 14. Another magnet 20 having a closed shape, for example being in the form of a circular ring, as shown in Figure 3B, is fixed within the support member 18 so as to extend around the bar magnet 19, as shown in Figure 4. The ring-shaped magnet 20 is magnetized parallel to its central axis, that is, in a direction substantially parallel to the longitudinal direction of the bar magnet 19, as shown in Figure 3B. As a result of the foregoing, the magnetic fields of the magnets 19 and 20 react with each other yieldably to retain the tubular member 14, and hence the objective lens 6 therein, against rectilinear movements along, and angular movements about the shaft 17 from a stable balanced position relative to the support member 18 and in which the bar magnet 19 is substantially centred within the ring-shaped magnet 20.

In order to effect rectilinear and angular movements of the objective lens 6 along and about the axis of the shaft 17, for example for achieving focusing servo control and tracking servo control, respectively, the optical device is further shown to include a bobbin 21 disposed within the ring-shaped magnet 20 and suitably bonded thereto. The bobbin 21 includes a ring portion having an opening 22 extending therethrough for loosely accommodating the bar magnet 19, a pair of radial projections 23a and 23b extending vertically, that is, parallel to the axis of the shaft 17, from diametrically opposed locations on the ring portion, and another pair of projections 24a and 24b extending horizontally, that is, at right angles to the axis of the shaft 17, from the opposite sides of the ring portion of the bobbin 21, as shown in Figures 3A and 3C. A pair of coils 25a and 25b are wound on the vertically directed projections 23a and 23b, respectively, and a pair of coils 26a and 26b are wound on the horizontally directed projections 24a and 24b, respectively. The coils 25a and 25b are connected in series and have their respective windings arranged, as shown in Figure 3C, so that, when a vertical control current is supplied to the coils 25a and 25b, in series, they establish magnetic flux in the same direction to affect the position of the bar magnet 19 within the central opening 22. The coils 26a and 26b are similarly shown to be connected in series and have their respective windings arranged so that, when a horizontal control current is supplied to the coils 26a and 26b, they produce magnetic flux in the same direction for again affecting the position of the bar magnet 19 within the central opening 22. Of course, the centre opening 22 is large enough to accommodate the movements of the bar magnet 19 corresponding to the desired movements of the objective lens 6 for fusing and tracking corrections.

As earlier noted, when neither a vertical control current nor a horizontal control current is supplied to the coils 25a and 25b or to the coils 26a and 26b, respectively, the bar magnet 19 is stably positioned substantially at the centre of the ring magnet 20. However, when a vertical control current is supplied to the coils 25a and 25b, or a horizontal control current is supplied to the coils 26a and 26b, the bar magnet 19 is displaced from the centre of the ring magnet 20 in a direction, and to an extent determined by the polarity and amplitude, respectively, of the vertical or horizontal control current thus supplied. The lens holder 9' and the objective lens 6 therein are, of course, moved in correspondence with the movement of the bar magnet 19 in response to the vertical or horizontal control current. Accordingly, when the embodiment of Figures 3A, 3B, 3C and 4 is applied to the optical disc player of Figure 1, focusing servo control can be effected by controlling the position of the lens holder 9' in the vertical direction, that is, in the rectilinear direction along the axis of the shaft 17, while tracking servo control is effected by controlling the position of the lens holder 9' in the horizontal direction, that is, in the direction of the angular displacements of the lens holder 9' about the axis of the shaft 17.

If the weight of the assembly movable along the shaft 17, that is, the combined weight of the objective lens 6, the tubular member 14, the arm 15, the bearing 16 and the bar magnet 19, is greater than the magnetic reactive force between the bar magnet 19 and the ring-shaped magnet 20, the bar magnet 19 tends to be balanced at a position below the centre of the ring-shaped magnet 20 when neither a vertical control current nor a horizontal control current is supplied. In such case, an appropriate bias current may be continuously supplied to the vertical coils 25a and 25b so as to re-established the balanced position of the bar magnet 19 at the centre of the ring-shaped magnet 20.

Although the shaft 17 has been described as being mounted with its axis extending in the vertical direction, the optical device may be arranged with the shaft 17 extending in the horizontal direction, for example, for use in an optical disc player in which the record disc being scanned is rotatable in a vertical plane about a horizontal axis. In that case, a bias current may be supplied to the horizontal coils 26a and 26b for establishing the stable balanced position of the bar magnet 19 substantially at the centre of the ring-shaped magnet 20.

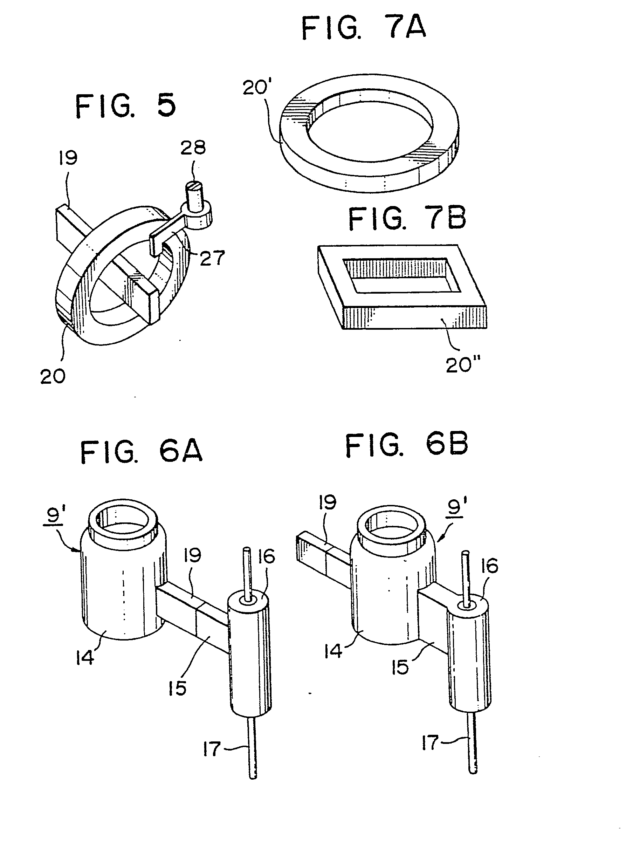

Further, as shown in Figure 5, the stable balanced position of the bar magnet 19, at a time when neither a vertical nor a horizontal control current is supplied to the respective coils, may be adjusted by means of a field adjusting element 27, or iron or other magnetic material, pivotally mounted adjacent to the ring-shaped magnet 20 on an adjusting screw 28. It will be appreciated that the location of the adjusting element 27 relative to the ring-shaped magnet 20 can be varied by turning the adjusting screw 28 so as to vary the distribution of magnetic flux provided by the ring-shaped magnet 20, and thereby correspondingly vary the stable balanced position of the bar magnet 29 within the ring-shaped magnet 20.

In the embodiment described with reference to Figures 3A and 4, the tubular member 14 containing the objective lens 6 and the bar magnet 19 are respectively disposed at opposite sides of the axis of the shaft 17 around which are effected the movements of the objective lens 6 at right angles to its optical axis. This arrangement is advantageous in that the weight of the bar magnet 19 may substantially balance the effect of the combined weight of the tubular member 14 and the objective lens 6 about the ball bearing 16 movable along the shaft 17. Moreover, the bar magnet 19 may be disposed relatively close to the ball bearing 16 with the result that the assembly of the lens holder 9' for the objective lens 6 and the bar magnet 19 can be moved relatively smoothly in the vertical direction along the shaft 17 in response to the supplying of a vertical control current to the coils 25a and 25b. However, other arrangements of the bar magnet 19 relative to the tubular member 14 of the lens holder 9' can be provided.

For example, as shown in Figures 6A and 6B, both the tubular member 14 of the lens holder 9' and the bar magnet 19 may be provided at the same side of the shaft 17. More particularly, the bar magnet 19 may be interposed between the tubular member 14 of the lens holder 9' and the arm 15 extending radially from the ball bearing 16 which is movable axially along the shaft 17 and angularly thereabout (Figure 6A). Alternatively, the tubular member 14 of the lens holder 9' may be connected by the radial arm 15 to the ball bearing 16 movable along and about the shaft 17, and the bar magnet 19 may extend from the tubular member 14 at the side thereof opposed to the arm 15 (Figure 6B). Of course, it will be understood that in the embodiments of Figures 6A and 6B, respectively, the structures there shown are to be associated with a ring-shaped magnet 20 and a bobbin 21 with coils thereon substantially as shown in Figure 3A, but with the ring-shaped magnet 20 and the bobbin 21 being disposed, in each case, so as to extend around the respective bar magnet 19.

It will be further appreciated that, in each of the embodiments of Figures 6A and 6B, the ball bearing 16 is provided at one end of the structure which is movable vertically along the shaft 17 and also angularly displaceable about the axis of the shaft 17. By reason of the foregoing, in each of Figures 6A and 6B, electromagnetically induced horizontal movements of the bar magnet 19, for example, in response to the supplying of a horizontal control current to the coils 26a and 26b, are transmitted directly to the tubular member 14 of the lens holder 9', rather than being transmitted through the ball bearing 16 as in the embodiment of Figures 3A and 4. Therefore, in Figures 6A and 6B, the horizontal displacements of the objective lens 6 in the lens holder 9' are substantially shielded from the effects of mechanical resonance due to the ball bearing 16. Particularly, in the case of the embodiment shown in Figure 6A, the distance between the tubular member 14 of the lens holder 9' and the ball bearing 16 can be increased for reducing jitter in the horizontal movement of the objective lens 6 in the tubular member 14 in response to the tracking servo control or other source of the horizontal control current. Moreover, since the tubular member 14 of the lens holder 9' is positioned at one end of the structure which has the ball bearing 16 at its opposite end in the embodiment of Figure 6A, the lowest resonant frequency for horizontal movement of the objective lens 6 is decreased. Also, in the embodiment of Figure 6a, the horizontal movement of the tubular member 14 of the lens holder 9' is magnified relative to the horizontal movements of the objective lens 6 for tracking servo control or the like can be achieved with a relatively reduced horizontal movement of the bar magnet 19 so as to obtain superior linearity in the tracking servo control.

Although the ball bearing 16 for mounting the lens holder 9' on the shaft 17 has been described above, it will be understood that a suitable slide bearing may be employed in place of the ball bearing 16. Furthermore, the ring-shaped magnet 20 may be replaced by a magnet having some other closed shape. For example, the ring-shaped magnet 20 may be replaced by an oval magnet 20' (Figure 7A), or by a rectangular loop magnet 20" (Figure 7B). In devices employing a fixed magnet of a closed shape other than a circle, the distribution of the magnetic flux in the area surrounded by the magnet of closed non-circular shape and which acts on the bar magnet 19 will have different distributions in the vertical and horizontal directions, respectively. Thus, the sensitivity of the vertical movement, for example, in response to a focusing error signal, can be made different from the sensitivity of the movement in the horizontal direction, for example, in response to a tracking error signal, with the result that cross-talk between the vertical magnetic flux and the horizontal magnetic flux can be reduced. Further, although the bar magnet 19 has been shown to be of rectangular cross-sectional configuration, the cross-section of the bar magnet 19 may be otherwise shaped, for example, may be circular, oval or otherwise polygonal, so as to provide various selected characteristics in combination with the ring-shaped magnet 20 or other magnet of closed shape substituted therefor.

It will be apparent from the above that, in optical devices for controlling a light beam and according to the invention, no mechanical springs are used for mounting the optical element or the objective lens 6 acting on the light beam so as to permit movement of such optical element in two different directions from a neutral position. Rather, a magnetic reactive force is utilized yieldably to maintain the optical element in a predetermined stable or balanced position from which it may be displaced in two right angularly related directions by respective electromagnetically generated forces. Thus, the optical devices avoid the undesirable consequences of the mechanical resonances that arise when springs are used for similarly supporting the optical element. Moreover, in eliminating such supporting springs, the optical devices according to the invention employ a reduced number of parts so as to simplify the devices and permit the miniaturization and reduction in weight thereof. Further, the use of the moving bar magnet 19 for effecting movements of the optical element makes it possible to improve the sensitivity of such movements to respective focusing or tracking control signals without increasing the weight of the device. Finally, in the embodiments, the optical axis of the objective lens 6 is maintained precisely parallel to the axis of the shaft 17, particularly when the bearing is a ball bearing, with the result that relatively higher accuracies can be attained for the focusing servo control and the tracking servo control.

Although the angular displacements about the axis of the shaft 17 have been described above as being for the purpose of correcting tracking errors by moving the spot at which the focused laser light beam impinges on the disc 1 in the direction transverse to the record track being scanned, it is apparent that the support member 18 could be oriented so that the angular displacements or horizontal movements of the objective lens 6 about the axis of the shaft 17 cause the point of impingement of the focused light beam on the disc 1 to move in the direction along the record track, whereby to correct for time base errors.

## Claims

1. In an apparatus for directing a light beam onto a record medium surface for optically reading information recorded in a track on said surface; an optical scanning assembly comprising:

lens means (6) interposed in the path of said light beam and having an optical axis substantially coinciding with said path;

a support member (18) defining a support axis (17); and

a movable member (14) mounted on said support member (18) for rectilinear movements along and for angular movements about said support axis, said lens means (6) being carried by said movable member (14);

characterized in that:

said optical axis is substantially parallel to, and offset from said support axis (17) so that said rectilinear movements vary the focus of said light beam at said surface and said angular movements vary the position on said surface at which the focused light beam impinges;

a first magnet (19) in the shape of a bar is carried by said movable member (14) and is magnetized in a longitudinal direction extending substantially radially with respect to said support axis;

a second magnet (20) is fixed relative to said support member (18) and has a closed shape extending around said first magnet (19), said second magnet (20) being magnetized in a direction substantially parallel to said longitudinal direction in which said first magnet (19) is magnetized to provide a magnetic field which reacts with the magnetic field of said first magnet (19) for yieldably resisting said rectilinear and angular movements of said movable member (14), and said lens means (6) carried thereby, from a stable balanced position relative to said support member (18); and

first and second electromagnetic means (25a, 25b, 26a, 26b) are selectively operative to cause said rectilinear and angular movements, respectively, of said movable member (14).

2. Apparatus according to claim 1 further comprising a magnetic element (27) adjustably movable into said magnetic field of said second magnet (20) for varying the flux distribution in said magnetic field and thereby adjusting said stable balanced position of said movable member (14) and of said lens means (6) carried thereby.

3. Apparatus according to claim 1 or claim 2 wherein said closed shape of said second magnet (20) is circular.

4. Apparatus according to claim 1 or claim 2 wherein said closed shape of said second magnet (20') is oval.

5. Apparatus according to claim 1 or claim 2 wherein said closed shape of said second magnet (20") is rectangular.

6. Apparatus according to claim 1 wherein said lens means (6) and said first magnet (19) are at opposite sides of said support axis about which said angular movements occur.

7. Apparatus according to claim 1 wherein said lens means (6) and said first magnet (19) are both disposed on the same side of said support axis about which the angular movements occur.

8. Apparatus according to claim 7 wherein said first magnet (19) is between said lens means (6) and said support axis.

9. Apparatus according to claim 7 wherein said lens means (6) is between said first magnet (19) and said support axis.

10. An optical device according to any one of the preceding claims further comprising a bobbin (21) located within said closed shape of said second magnet (20) having a central opening into which said bar magnet (19) extends with substantial clearance therebetween, said bobbin (21) having a first pair of projections (23a, 23b) extending generally parallel to said support axis and a second pair of projections (24a, 24b) extending generally at right angles to said support axis, first coils (25a, 25b) on said first projections (23a, 23b) for receiving an electric current for causing said rectilinear movements of said movable member (14), and second coils (26a, 26b) on said second projections (24a, 24b) for receiving an electric current for causing said angular movements of said movable member (14).

## Patentansprüche

1. In einem Gerät zum Ausrichten eines Lichtstrahls auf die Oberfläche eines Aufzeichnungsmediums zum optischen Auslesen von in einer Spur von dieser Oberfläche aufgenommenen Informationen vorgesehene optische Abtasteinrichtung,

mit einem Objektiv (6), das in den Strahlengang des genannten Lichstrahls eingefügt ist und dessen optische Achse im wesentlichen mit diesem Strahlengang zusammenfällt,

mit einem eine Lagerungsachse (17) definierenden Tragteil (18),

sowie mit einem das Objektiv (6) tragenden beweglichen Glied (14), das auf dem Tragteil (18) derart montiert ist, daß es geradlinige Bewegungen längs der und Winkelbewegungen um die genannte Lagerungsachse (17) ausführen kann,

dadurch gekennzeichnet,

daß die genannte optische Achse im wesentlichen parallel zu der Lagerungsachse (17) verläuft und ihr gegenüber versetzt ist, derart daß die geradlinigen Bewegungen die Fokussierung des Lichtstrahls auf der Oberfläche des Aufzeichnungsmedium und die Winkelbewegungen die Position auf dieser Oberfläche variieren, an der der fokussierte Lichtstrahl auftritt,

daß das bewegliche Glied (14) einen stabförmigen ersten Magneten (19) trägt, der in Längsrichtung magnetisiert ist und sich im wesentlichen in radialer Richtung zu der Lagerungsachse (17) erstreckt,

daß ein zweiter Magnet (20) vorgesehen ist, der gegenüber dem Tragteil (18) feststeht, der eine um den ersten Magneten (19) herumlaufen geschlossene Gestalt besitzt und der in einer Richtung magnetisiert ist, die im wesentlichen parallel zur Längsrichtung verläuft, in der der erste Magnet (19) magnetisiert ist, so daß er ein magnetisches Feld erzeugt, das mit dem magnetischen Feld des ersten Magneten (19) derart reagiert, daß den genannten geradlinigen und Winkelbewegungen des beweglichem Glieds (14) und des von ihm getragenen Objektivs (6) nachgiebiger Widerstand entgegengesetzt ist, wenn sie sich aus einer stabilen Gleichgewichtsposition relativ zu dem Tragteil (18) bewegen,

und daß die geradlinigen bzw. die Winkelbewegungen des beweglichen Glieds (14) durch selektive Betätigung einer ersten und einer zweiten elektromagnetischen Einrichtung (25a, 25b, 26a, 26b) erzeugbar sind.

2. Gerät nach Anspruch 1 mit einem magnetischen Element (27), das zur Veränderung der Flußverteilung in dem magnetischen Feld des zweiten Magneten (20) und zur Justierung der genannten stabilen Gleichgewichtsposition des beweglichen Glieds (14) und des von ihm getragenen Objektivs (6) mit einstellbarer Bewegung in das magnetische Feld des zweiten Magneten (20) hineinführbar ist.

3. Gerät nach Anspruch 1 oder 2, bei dem die geschlossene Gestalt des zweiten Magneten (20) kreisförmig ist.

4. Gerät nach Anspruch 1 oder 2, bei dem die geschlossene Gestalt des zweiten Magneten (20') oval ist.

5. Gerät nach Anspruch 1 oder 2, bei dem die geschlossene Gestalt des zweiten Magneten (20") rechteckig ist.

6. Gerät nach Anspruch 1, bei dem das Objektiv (6) und der erste Magnet (19) an entgegengesetzten Seiten der Lagerungsachse (17) angeordnet sind, um welche die Winkelbewegung erfolgt.

7. Gerät nach Anspruch 1, bei dem das Objektiv (6) und der erste Magnet (19) auf der gleichen Seite der Lagerungsachse (17) angeordnet sind, um welche die Winkelbewegung erfolgt.

8. Gerät nach Anspruch 7, bei dem der erste Magnet (19) sich zwischen dem Objektiv (6) und der Lagerungsachse (17) befindet.

9. Gerät nach Anspruch 7, bei dem das Objektiv (6) sich zwischen dem ersten Magneten (19) und der Lagerungsachse (17) befindet.

10. Optische Einrichtung nach einem oder mehreren der vorhergehenden Ansprüche

mit einer in der geschlossenen Gestalt des zweiten Magneten (20) angeordneten Spule (21), die eine zentrale Öffnung besitzt, in die der stabförmige Magnet (19) mit allseitigem Abstand hineinragt,

wobei diese Spule (21) ein erstes Paar von Vorsprüngen (23a, 23b) besitzt, die im wesentlichen parallel zu der Lagerungsachse (17) verlaufen, sowie ein zweites Paar von Vorsprüngen (24a, 24b), die im wesentlichen im rechten Winkel zu der Lagerungsachse verlaufen,

wobei ferner auf den ersten Vorsprüngen (23a, 23b) erste Wicklungen (25a, 25b) angeordnet sind, denen ein elektrischer Strom zur Erzeugung der geardlinigen Bewegungen des beweglichen Glieds (14) zuführbar ist,

und wobei auf den zweiten Vorsprüngen (24a, 24b) zweiten Wicklungen (26a, 26b) angeordnet sind, denen ein elektrischer Strom zur Erzeugung der Winkelbewegungen des beweglichen Glieds (14) zuführbar ist.

## Revendications

1. Dans un appareil servant à diriger un faisceau lumineux sur la surface d'un support d'enregistrement afin de lire optiquement l'information enregistrée dans une piste formée sur ladite surface, un ensemble de balayage optique comprenant:

— un objectif optique (6) placé sur le trajet dudit faisceau lumineux et comportant un axe optique qui coïncide sensiblement avec ledit trajet;

— un élément de support (18) définissant un axe de support (17); et

— un élément mobile (14) monté sur ledit élément de support (18) de manière à effectuer des déplacements rectilignes le long dudit axe de support et des déplacements angulaires autour dudit axe de support, ledit objectif optique (6) étant porté par ledit élément mobile (14);

caractérisé en ce que:

ledit axe optique est sensiblement parallèle audit axe de support (17) et est écarté de celui-ci de façon que lesdits déplacements rectilignes fassent varier la mise au point dudit faisceau lumineux au niveau de ladite surface et que lesdits déplacements angulaires fassent varier la position, sur ladite surface, avec laquelle le faisceau lumineux mis au point entre en contact;

un premier aimant (19) ayant la forme d'un barreau est porté par ledit élément mobile (14) et est aimanté suivant une direction longitudinale orientée sensiblement radialement par rapport audit axe de support;

un deuxième aimant (20) est fixe par rapport audit élément de support (18) et possède une forme fermée entourant ledit premier aimant (19), ledit deuxième aimant (20) étant aimanté dans une direction sensiblement parallèle à ladite direction longitudinale dans laquelle ledit premier aimant (19) est aimanté afin de produire un champ magnétique qui réagit avec le champ magnétique dudit premier aimant (19) de façon à s'opposer élastiquement auxdits déplacements rectilignes et angulaires dudit élément mobile (14), ainsi, qu'à ceux dudit objectif optique (6) portés par celui-ci, vis-à-vis d'une position d'équilibre stable relative audit élément de support (18); et

un premier et un deuxième moyen électromagnétiques (25a, 25b, 26a, 26b) sont sélectivement activés de façon à provoquer respectivement lesdits déplacements rectilignes et angulaires dudit élément mobile (14).

2. Appareil selon la revendication 1, comprenant en outre un élément magnétique (27) pouvant être déplacé de manière réglable dans ledit champ magnétique dudit deuxième aimant (20) afin de faire varier la distribution du flux dans ledit champ magnétique et ainsi ajuster ladite position d'équilibre stable dudit élément mobile (14) et dudit objectif optique (6) porté par celui-ci.

3. Appareil selon la revendication 1 ou 2, où ladite forme fermée dudit deuxième aimant (20) est circulaire.

4. Appareil selon la revendication 1 ou 2, où ladite forme fermée dudit deuxième aimant (20') est ovale.

5. Appareil selon la revendication 1 ou 2, où ladite forme fermée dudit deuxième aimant (20'') est rectangulaire.

6. Appareil selon la revendication 1, où ledit objectif optique (6) et ledit premier aimant (19) se trouvent sur les côtés opposés dudit axe de support autour duquel lesdits déplacements angulaires se produisent.

7. Appareil selon la revendication 1, où ledit objectif optique (6) et ledit premier aimant (19) sont tous deux disposés du même côté dudit axe de support autour duquel les déplacements angulaires se produisent.

8. Appareil selon la revendication 7, où ledit premier aimant (19) est placé entre ledit objectif (6) et ledit axe de support.

9. Appareil selon la revendication 7, où ledit objectif optique (6) est situé entre ledit premier aimant (19) et ledit axe de support.

9. Appareil selon la revendication 7, où ledit objectif optique (6) est situé entre ledit premier aimant (19) et ledit axe de support.

10. Dispositif optique selon l'une quelconque des revendications précédentes comprenant en outre une carcasse 21 placée à l'intérieur de ladite forme fermée du deuxième aimant (20) et présentant une ouverture centrale dans laquelle passe ledit aimant en forme de barreau (19) en laissant un jeu important entre eux, ladite carcasse (21) possédant une première paire de parties saillantes (23a, 23b) orientées sensiblement parallèlement audit axe de support et une deuxième paire de parties saillantes (24a, 24b) orientées sensiblement à angle droit dudit axe de support, les premières bobines (25a, 25b) étant disposées sur lesdites premières parties saillantes (23a, 23b) dans le but de recevoir un courant électrique destiné à provoquer lesdits déplacements rectilignes dudit élément mobile (14), et des deuxièmes bobines (26a, 26b) disposées sur lesdites deuxièmes parties saillantes (24a, 24b) dans le but de recevoir un courant électrique destinée à produire lesdits déplacements angulaires dudit élément mobile (14).

FIG. 1

FIG. 2

FIG. 3A

FIG. 3B

19    20

S  SN
   N

FIG. 3C

25a    23a
26a                24b
24a                26b
           21
25b    23b

FIG. 4

18

9'    13
   13    14
6          16    20    25a
   13               23a
13    15            22
                    26b
      17            19
                    23b
                    25b
                    21

0 063 934

FIG. 7A

FIG. 5

20'

19          28

27

20

FIG. 7B

20"

FIG. 6A

9'

19   16

14

15

17

FIG. 6B

19

9'

16

14

15

17

3